# EUROPEAN PATENT APPLICATION

(11) **EP 4 462 271 A1**
(43) Date of publication of application: **13.11.2024**
(21) Application number: 24174570.2
(22) Date of filing: 07.05.2024
(51) Int. Cl.: G06F 15/78, G06N 3/063

(54) **METHOD AND APPARATUS FOR ADJUSTING ARTIFICIAL INTELLIGENCE CHIP, CHIP, AND STORAGE MEDIUM**

(30) Priority: 08.05.2023 CN 202310513173
(71) Applicant: Beijing Horizon Information Technology Co., Ltd., Beijing 100094 (CN)
(72) Inventor: Zhang, Bin, Beijing, 100094 (CN)
(74) Representative: v. Bezold & Partner Patentanwälte - PartG mbB

(57) **Abstract**

Disclosed are a method for adjusting an artificial intelligence chip, a chip, and a storage medium. The method includes: determining state information indicating an artificial intelligence accelerator on an artificial intelligence chip is in a preset state; and adjusting a working state of the artificial intelligence chip based on the state information. According to this disclosure, the state information indicating the artificial intelligence accelerator is in the preset state can characterize continuity and frequency of the accelerator in the preset state. Therefore, different operating states can be set for the artificial intelligence chip based on different situations of the state information. When the state information indicating the artificial intelligence accelerator is in the preset state meets different conditions, the working state of the artificial intelligence chip can be adjusted to different operating states. While ensuring an available operation result of the accelerator, availability of a chip product can be improved.

## Description

### FIELD OF THE INVENTION

This disclosure relates to the field of artificial intelligence chips, and in particular, to a method and an apparatus for adjusting an artificial intelligence chip, a chip, and a storage medium.

### BACKGROUND OF THE INVENTION

In scenarios such as autonomous driving and assisted driving, usually an artificial intelligence accelerator on an artificial intelligence chip needs to be used to execute algorithm model instructions, so as to complete image processing such as perception and recognition on images collected by a sensor, to obtain a processing result for vehicle planning and control. In related technologies, because applications such as autonomous driving and assisted driving have high requirements on safety, when there is a hardware error in the artificial intelligence accelerator, a commonly used countermeasure is to stop running the artificial intelligence chip, which results in lower effective utilization of a chip product.

### SUMMARY OF THE INVENTION

To resolve the foregoing technical problem of low effective utilization of a chip product, embodiments of this disclosure provide a method and an apparatus for adjusting an artificial intelligence chip, a chip, and a storage medium, to improve the utilization of the chip product.

According to a first aspect of this disclosure, a method for adjusting an artificial intelligence chip is provided, including: determining state information indicating that an artificial intelligence accelerator on an artificial intelligence chip is in a preset state; and adjusting a working state of the artificial intelligence chip based on the state information.

According to a second aspect of this disclosure, an apparatus for adjusting an artificial intelligence chip is provided, including: a processing module, configured to determine state information indicating that an artificial intelligence accelerator on an artificial intelligence chip is in a preset state; and a control module, configured to adjust a working state of the artificial intelligence chip based on the state information.

According to a third aspect of this disclosure, a computer readable storage medium is provided. The storage medium stores a computer program, and the computer program is used for implementing the method for adjusting an artificial intelligence chip described in any one of the foregoing embodiments of this disclosure.

According to a fourth aspect of this disclosure, an artificial intelligence chip is provided, including: an artificial intelligence accelerator and an apparatus for adjusting an artificial intelligence chip, wherein the apparatus for adjusting an artificial intelligence chip is configured to implement the method for adjusting an artificial intelligence chip described in any one of the foregoing embodiments of this disclosure.

According to a fifth aspect of this disclosure, a computer program product is provided. When instructions in the computer program product are executed by a processor, the method for adjusting an artificial intelligence chip provided in embodiments of the first aspect is implemented.

Based on the method and apparatus for adjusting an artificial intelligence chip, the chip, and the storage medium that are provided in the foregoing embodiments of this disclosure, during operating of the chip, the working state of the artificial intelligence chip may be adjusted based on the state information indicating that the artificial intelligence accelerator on the artificial intelligence chip is in the preset state. The state information indicating that the artificial intelligence accelerator is in the preset state may characterize continuity and frequency of the accelerator in the preset state. Therefore, different operating states may be set for the artificial intelligence chip based on different situations of the state information. Thus, when the state information indicating that the accelerator is in the preset state meets different conditions, the working state of the artificial intelligence chip may be adjusted to different operating states. For example, a current operating state of the chip is kept when the accelerator is merely in an occasional preset state. Or, when state information of some accelerators meets a preset condition, the working state of the chip is adjusted to an operating state in which some accelerators are available. In this way, while ensuring an available operation result of the accelerator, availability of a chip product may be improved, thereby greatly improving utilization of the chip product.

### BRIEF DESCRIPTION OF THE DRAWINGS

FIG. 1 shows an exemplary application scenario of a method for adjusting an artificial intelligence chip according to this disclosure;
FIG. 2 is a schematic flowchart of a method for adjusting an artificial intelligence chip according to an exemplary embodiment of this disclosure;
FIG. 3 is a schematic flowchart of a method for adjusting an artificial intelligence chip according to another exemplary embodiment of this disclosure;
FIG. 4 is a schematic flowchart of a method for adjusting an artificial intelligence chip according to still another exemplary embodiment of this disclosure;
FIG. 5 is a schematic flowchart of a method for adjusting an artificial intelligence chip according to yet another exemplary embodiment of this disclosure;
FIG. 6 is a schematic flowchart of a method for adjusting an artificial intelligence chip according to a further exemplary embodiment of this disclosure;
FIG. 7 is a schematic flowchart of a method for adjusting an artificial intelligence chip according to still further exemplary embodiment of this disclosure;
FIG. 8 is a schematic diagram of accelerator scheduling for multi-frame image processing according to an exemplary embodiment of this disclosure;
FIG. 9 is a schematic flowchart of a method for adjusting an artificial intelligence chip according to a yet further exemplary embodiment of this disclosure;
FIG. 10 is a schematic diagram of a structure of an apparatus for adjusting an artificial intelligence chip according to an exemplary embodiment of this disclosure;
FIG. 11 is a schematic diagram of a structure of an apparatus for adjusting an artificial intelligence chip according to another exemplary embodiment of this disclosure;
FIG. 12 is a schematic diagram of a structure of an apparatus for adjusting an artificial intelligence chip according to still another exemplary embodiment of this disclosure;
FIG. 13 is a schematic diagram of a structure of an artificial intelligence chip according to an exemplary embodiment of this disclosure; and
FIG. 14 is a diagram of a structure of an electronic device according to an embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that in scenarios such as autonomous driving and assisted driving, usually an artificial intelligence accelerator (which may be referred to as accelerator for short below) on an artificial intelligence chip (which may be referred to as chip for short below) needs to be used to execute algorithm model instructions, so as to complete image processing such as perception and recognition on images collected by a sensor, to obtain a processing result for vehicle planning and control. In related technologies, because applications such as autonomous driving and assisted driving have high requirements on safety, when there is a hardware error in the artificial intelligence accelerator, a commonly used countermeasure is to stop running the artificial intelligence chip, which results in lower effective utilization of a chip product.

### Exemplary overview

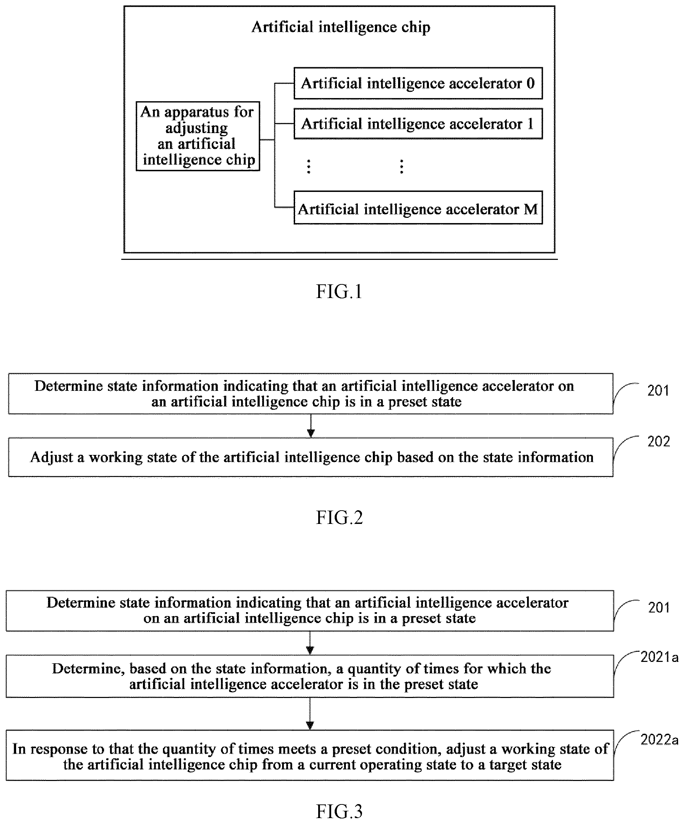

FIG. 1 shows an exemplary application scenario of a method for adjusting an artificial intelligence chip according to this disclosure. During application of the artificial intelligence chip, an apparatus for adjusting an artificial intelligence chip may be disposed on the artificial intelligence chip, to implement the method for adjusting an artificial intelligence chip in this disclosure. The artificial intelligence chip may include M artificial intelligence accelerators, that is, an artificial intelligence accelerator 0, an artificial intelligence accelerator 1, ..., and an artificial intelligence accelerator M, to accelerate an inference process of an algorithm model. M is a positive integer. During working of the artificial intelligence chip, state information indicating that the artificial intelligence accelerator on the artificial intelligence chip is in the preset state may be determined in a real-time manner or in a timing manner, so as to adjust a working state of the artificial intelligence chip based on the state information. The state information may characterize continuity and frequency of the artificial intelligence accelerator in the preset state, and may also characterize severity of an accelerator error. Therefore, different operating states may be set for the chip based on different situations of the state information of the accelerator. Thus, when the state information indicating that the accelerator is in the preset state meets different conditions, the working state of the artificial intelligence chip may be adjusted to different operating states. For example, a current operating state of the chip is kept when the accelerator is merely in an occasional preset state. Alternatively, when state information about some accelerators meets a preset condition, the working state of the chip is adjusted to an operating state in which some accelerators are available. In this way, the chip may be prevented from being directly stopped from operating, which may improve availability of a chip product, thereby greatly improving utilization of the chip product. The preset state may be set according to actual requirements. For example, the preset state may include a state in which the accelerator has an error. The state information may include frame information, time information, a quantity of times, and other information about occurrence of the preset state, which may be specifically set according to actual requirements.

The method for adjusting an artificial intelligence chip in embodiments of this disclosure may be applied to any field or scenario that requires an artificial intelligence chip, such as an autonomous driving scenario, an assisted driving scenario, and application scenarios for terminal devices such as a mobile phone and a tablet. Specific fields and scenarios are not limited.

### Exemplary method

FIG. 2 is a schematic flowchart of a method for adjusting an artificial intelligence chip according to an exemplary embodiment of this disclosure. This embodiment may be applicable to an electronic device, such as an in-car computing platform. As shown in FIG. 2, the method includes the following steps.

Step 201: Determine state information indicating that an artificial intelligence accelerator on an artificial intelligence chip is in a preset state.

The preset state may include a state in which the accelerator has an error. The state information may include at least one of frame information, time information, a quantity of times, and other information about occurrence of the preset state, which may be specifically set according to actual requirements. The frame information may include a frame number of a frame at which the preset state occurs. For example, the frame information is an N^{th} frame. The time information includes a timestamp when the preset state occurs. The quantity of times refers to a total quantity of times for which the preset state occurs at a current moment, or a total quantity of times for which the preset state occurs within preset duration before the current moment, which may be specifically set according to actual requirements.

In some optional embodiments, there may be one or more accelerators on the chip. When there are a plurality of accelerators, for each accelerator, the state information indicating that this accelerator is in the preset state may be determined.

In some optional embodiments, the state information indicating that the accelerator is in the preset state may be determined in any implementable manner. For example, whether the accelerator is in the preset state may be determined based on an inference result of the accelerator in actual work, so as to determine the state information indicating that the accelerator is in the preset state in combination with historical situations in which the preset state occurs. For another example, the accelerator may be tested in combination with a self-test structure on the chip, to determine the state information indicating that the accelerator is in the preset state. The specific determining manner may be specifically set according to actual requirements.

Step 202: Adjust a working state of the artificial intelligence chip based on the state information.

Different working states may be set for the artificial intelligence chip based on different state information. During an actual working process, the working state of the chip may be adjusted based on real-time state information, so as to ensure availability of the inference result of the accelerator and availability of the chip. For example, a mapping rule between the state information and the working state of the chip may be pre-set, so that a target state to which the chip needs to be adjusted may be determined based on the state information. Thus, the working state of the chip is adjusted from a current operating state to the target state.

In some optional embodiments, the working state may include an operating state in which all accelerators can be called, an operating state in which some of the accelerators can be called, an operating state in which some calculation units of the accelerator can be called, a functional degradation state of the chip, a state in which operation stops, and the like. This may be specifically set according to actual requirements. For example, when it is determined based on the state information that the accelerator is in the preset state for a relatively small quantity of times or at relatively low frequency, for example, has a single occasional hardware error which does not affect driving safety, the current operating state may be kept. If the state information indicating the preset state meets a preset condition, the working state of the chip may be adjusted from the current operating state to the target state. For example, if the accelerator in the preset state or a calculation unit in the accelerator can be located, the working state of the chip may be adjusted from the current operating state to an operating state in which some accelerators or calculation units can be called, thereby avoiding use of an accelerator or a calculation unit with a hardware error to continue calculations, and avoiding continuous errors, so as to effectively improve working reliability of the chip, thus improving driving safety of a vehicle to which the chip is applied. If insufficient computing power of the accelerator on the chip is caused due to too many accelerators with the state information indicating the preset state that meets the preset condition, the working state of the chip may be adjusted from the current operating state to the functional degradation state. Specific classification of the working state may be set according to actual requirements.

According to the method for adjusting an artificial intelligence chip provided in this embodiment, during working of the chip, the working state of the artificial intelligence chip may be adjusted based on the state information indicating that the artificial intelligence accelerator on the artificial intelligence chip is in the preset state. The state information indicating that the artificial intelligence accelerator is in the preset state may characterize continuity and frequency of the accelerator in the preset state, and may also characterize severity of an accelerator error. Therefore, different operating states may be set for the artificial intelligence chip based on different situations of the state information. Thus, when the state information indicating that the accelerator is in the preset state meets different conditions, the working state of the artificial intelligence chip may be adjusted to different operating states. For example, the current operating state of the chip is kept when the accelerator is merely in an occasional preset state. Alternatively, when state information of some accelerators meets the preset condition, the working state of the chip is adjusted to an operating state in which some accelerators are available . In this way, a situation in which the chip stops operating directly due to the accelerator error is effectively avoided. While ensuring an available operation result of the accelerator, availability of a chip product may be improved, thereby greatly improving utilization of the chip product.

FIG. 3 is a schematic flowchart of a method for adjusting an artificial intelligence chip according to another exemplary embodiment of this disclosure.

In some optional embodiments, step 202 of adjusting the working state of the artificial intelligence chip based on the state information includes the following steps.

Step 2021a: Determine, based on the state information, a quantity of times for which the artificial intelligence accelerator is in the preset state.

The quantity of times for which the accelerator is in the preset state may be a quantity of times accumulated since the chip started working, or may be a quantity of times accumulated in most recent preset duration, which may be specifically set according to actual requirements.

In practical application, after the chip starts working, the state of the accelerator may be maintained in a real-time manner, and the state information indicating that the accelerator is in the preset state may be recorded. The quantity of times for which the accelerator is in the preset state may be calculated based on the state information in a real-time manner, and may also be maintained while the state information is maintained. If the quantity of times is recorded as content of the state information, the quantity of times for which the preset state occurs may be directly extracted from the state information when the working state of the chip needs to be adjusted.

Step 2022a: In response to that the quantity of times meets a preset condition, adjust the working state of the artificial intelligence chip from a current operating state to a target state.

The preset condition may be set according to actual requirements. The preset condition may include one or more conditions, and different conditions may correspond to different target states. For example, if the preset condition is that the quantity of times is less than a threshold of times, the target state is the current operating state. If the preset condition is that the quantity of times is greater than the threshold of times, the target state is an operating state disabled for some accelerators or the functional degradation state of the chip. This is not specifically limited. Whether the quantity of times meets the preset condition may be detected in a real-time manner or in a timely manner during working of the chip. Therefore, the current operating state may be any one of the following: an operating state in which all accelerators can be called, an operating state in which some accelerators or calculation units can be called, the functional degradation state, and the like. This may be specifically set according to actual requirements. For example, initially, the working state of the chip is the operating state in which all accelerators can be called. When the accelerator encounters an error and the quantity of times is less than the threshold of times, the operating state in which all accelerators can be called is kept. When the quantity of times is greater than the threshold of times, the working state is adjusted from the current operating state in which all accelerators can be called to the operating state in which some accelerators can be called. When a quantity of accelerators, for which the quantities of times are greater than the threshold of times, exceeds a threshold of quantity, the working state of the chip is adjusted from the current operating state in which some accelerators can be called to the functional degradation state, to notify a planning and control module to perform functional degradation, such as downgrading the vehicle from an autonomous driving function to a semi-autonomous driving function, or downgrading to a driver takeover function.

In the embodiments, the quantity of times meets different preset conditions, so that the working state of the chip may be adjusted from the current operating state to different target states, thereby effectively increasing available time of the chip, and further improving utilization of the chip.

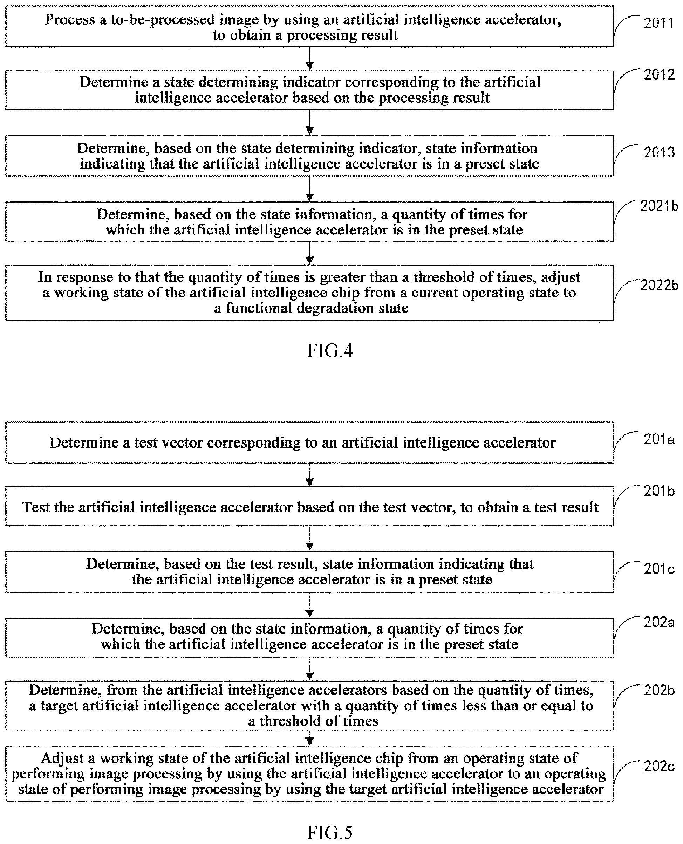

FIG. 4 is a schematic flowchart of a method for adjusting an artificial intelligence chip according to still another exemplary embodiment of this disclosure.

In some optional embodiments, step 201 of determining the state information indicating that the artificial intelligence accelerator on the artificial intelligence chip is in the preset state includes the following steps.

Step 2011: Process a to-be-processed image by using the artificial intelligence accelerator, to obtain a processing result.

The to-be-processed image may be an image of an application scenario of the chip. For example, in an autonomous driving scenario, the to-be-processed image may be an image of an external environment of the vehicle, an image inside a cockpit, an image of a driver, or the like. The processing result may be set according to actual requirements. For example, in the autonomous driving scenario, the processing result may include a target detection result, a semantic segmentation result, a trajectory prediction result, a planning and control result, and the like.

In some optional embodiments, algorithm model instructions for processing the to-be-processed image may be read and executed by using the accelerator, to process the to-be-processed image to obtain the processing result.

In some optional embodiments, the processing result may be obtained by using one or more accelerators. For a case of a plurality of accelerators, scheduling may be performed according to a certain scheduling rule, and the plurality of accelerators work together to obtain the processing result.

Step 2012: Determine a state determining indicator corresponding to the artificial intelligence accelerator based on the processing result.

The state determining indicator may be set according to actual requirements. For example, the state determining indicator may include confidence of the processing result, uncertainty of an algorithm model, and the like.

Step 2013: Determine, based on the state determining indicator, the state information indicating that the artificial intelligence accelerator is in the preset state.

The state determining indicator characterizes the credibility of the processing result of the accelerator. On this basis, whether the accelerator is in the preset state may be determined, so that the state information indicating the preset state may be determined.

In the embodiments, the preset state of the accelerator is effectively detected through an actual processing result for the to-be-processed image by the accelerator, so that the preset state of the accelerator may be detected effectively in a timely manner, thereby providing accurate and valid state information for adjusting the working state of the chip.

In some optional embodiments, step 2012 of determining the state determining indicator corresponding to the artificial intelligence accelerator based on the processing result includes:
determining, based on the processing result, confidence of the processing result and uncertainty of an algorithm model corresponding to algorithm model instructions executed by the artificial intelligence accelerator; and determining the state determining indicator based on the confidence of the processing result and the uncertainty.

The confidence of the processing result may be determined based on probabilities included in the processing result, such as a probability, in the target detection result, of a type to which a target belongs. A probability threshold may be set. When a probability of the processing result is greater than the probability threshold, it indicates that the processing result is a high-quality result, and the confidence is relatively high. When the probability is smaller than the probability threshold, it indicates that the processing result is a low-quality result, and the confidence is relatively low. The uncertainty of the algorithm model may be obtained by using any implementable uncertainty evaluation algorithm, such as an uncertainty evaluation algorithm based on predictive entropy, and an evaluation algorithm based on MC DROPOUT (Monte Carlo Dropout).

In the embodiments, the confidence of the processing result of the accelerator and the uncertainty of the algorithm model are used as the state determining indicator to effectively detect the preset state of the accelerator, so that the working state of the chip may be adjusted in a timely manner, thereby further improving driving safety of the vehicle.

In some optional embodiments, the method in this disclosure further includes:
performing preset post-processing on the processing result to obtain a post-processing result; and determining a post-processing indicator based on the post-processing result and a post-processing indicator determining rule.

The preset post-processing may be set according to actual requirements. For example, in the autonomous driving scenario, the preset post-processing may include filtering, optimization, and other processing. By performing the preset post-processing on the processing result, a more accurate processing result may be obtained for subsequent planning and control. For example, a position, a velocity, acceleration, and the like of a target object in the processing result are filtered or optimized to obtain an optimized position and velocity, as the post-processing result. The post-processing indicator determining rule may be set according to actual requirements. For example, error variation trends, relative to the processing result, of the position, the velocity, the acceleration, and the like of the target object, and a jumping situation of the target object (for example, sometimes the target is detected, and sometimes the target is not detected) may be determined based on the post-processing result. The post-processing indicator may be determined based on at least one of the error variation trend and the jump situation. The error variation trend may be determined through a standard deviation of a multi-frame error. For example, when the standard deviation exceeds a threshold, it is determined that the accelerator is in the preset state.

Determining the state determining indicator based on the confidence of the processing result and the uncertainty includes:
taking the confidence of the processing result, the uncertainty, and the post-processing indicator as the state determining indicator.

In some optional embodiments, if the confidence of the processing result becomes relatively low periodically (the probability less than the probability threshold), it is determined that the accelerator is in the preset state. For the uncertainty of the algorithm model, an uncertainty threshold may be set. When the uncertainty of the algorithm model exceeds the uncertainty threshold, it is determined that the accelerator is in the preset state. For the post-processing indicator, when the post-processing indicator exceeds an indicator threshold, it is determined that the accelerator is in the preset state.

In the embodiments, the confidence of the processing result, the uncertainty, and the post-processing indicator are further used as the state determining indicator to determine whether the accelerator is in the preset state. In this way, detection coverage of the preset state may be improved, so as to further improve accuracy of adjusting the working state of the chip, thereby further effectively improving the driving safety of the vehicle.

In some optional embodiments, the method in this disclosure further includes: determining a signal-to-noise ratio of to-be-processed data corresponding to the artificial intelligence accelerator.

The to-be-processed data corresponding to the artificial intelligence accelerator refers to data that serves as input of the artificial intelligence accelerator, and is determined based on specific algorithm model instructions to be executed by the artificial intelligence accelerator. For example, for an accelerator that executes instructions of a perception algorithm model, the corresponding to-be-processed data is a to-be-processed image; and for an accelerator perceiving a downstream algorithm model, the corresponding to-be-processed data may be a processing result of an upstream accelerator, which may be, for example, referred to as a feature map. This may be specifically set according to actual requirements. The signal-to-noise ratio of the to-be-processed data may be determined based on the to-be-processed data. A specific determining manner may be any implementable signal-to-noise ratio determining manner. For example, by calculating a local variance of all pixels in the to-be-processed data, a maximum value of the local variance is taken as a signal variance, and a minimum value is taken as a noise variance, and a ratio of the signal variance to the noise variance is determined. The ratio is converted into a dB (decibel) value, and then is corrected according to a preset formula, to obtain the signal-to-noise ratio of the to-be-processed data.

Determining the state determining indicator based on the confidence of the processing result and the uncertainty includes:
taking the confidence of the processing result, the uncertainty, and the signal-to-noise ratio as the state determining indicator.

For the signal-to-noise ratio, a signal-to-noise ratio threshold may be set. When the signal-to-noise ratio of the to-be-processed data exceeds the signal-to-noise ratio threshold, it may be determined that the accelerator corresponding to the to-be-processed data is in the preset state.

In the embodiments, the signal-to-noise ratio is further combined to serve as the state determining indicator. In this way, the detection coverage of the preset state may be further improved, so as to further improve the accuracy of adjusting the working state of the chip, thereby further effectively improving the driving safety of the vehicle.

In some optional embodiments, the confidence of the processing result, the uncertainty, the post-processing indicator, and the signal-to-noise ratio may also be used as the state determining indicator to determine whether the accelerator is in the preset state, so as to further improve detection coverage of an accelerator error, thereby further improving the safety.

In some optional embodiments, step 202 of adjusting the working state of the artificial intelligence chip based on the state information includes the following steps.

Step 2021b: Determine, based on the state information, a quantity of times for which the artificial intelligence accelerator is in the preset state.

For determining of the quantity of times, reference may be made to the content described above, and details are not described herein again.

Step 2022b: In response to that the quantity of times is greater than a threshold of times, adjust the working state of the artificial intelligence chip from a current operating state to a functional degradation state.

The threshold of times may be set according to actual requirements. The functional degradation state refers to that a planning and control module of the vehicle is required to downgrade functions of the vehicle. For example, an autonomous driving vehicle is downgraded from an autonomous driving function to a driver takeover function. The specific functional degradation state may be set according to actual requirements. When the quantity of times for which the artificial intelligence accelerator is in the preset state is greater than the threshold of times, it indicates that the accelerator has encountered a serious issue, which may be a hardware issue or an issue of the algorithm model. To ensure working safety of the chip, the working state of the chip is adjusted from the current operating state to the functional degradation state.

In some optional embodiments, a plurality of functional degradation states may be set, which respectively correspond to different threshold values, so as to implement hierarchical degradation of functions.

In the embodiments, the working state of the chip is adjusted from the current operating state to the functional degradation state when the quantity of times for which the accelerator is in the preset state exceeds the threshold of times, so as to avoid security risks caused by multiple inference errors of the accelerator, thereby effectively ensuring security of a working scenario of the chip.

In some optional embodiments, step 2011 of processing the to-be-processed image by using the artificial intelligence accelerator, to obtain the processing result includes:
determining current frame information corresponding to the to-be-processed image; determining, according to a mapping rule between the frame information and algorithm model information, algorithm model information corresponding to the current frame information from multiple pieces of algorithm model information; determining, from the artificial intelligence accelerator based on the algorithm model information corresponding to the current frame information, a target artificial intelligence accelerator that needs to execute algorithm model instructions corresponding to the algorithm model information; and executing the algorithm model instructions by using the target artificial intelligence accelerator, to obtain the processing result.

The current frame information includes a number of a frame to which the to-be-processed image belongs. For example, the to-be-processed image is at a 10^{th} frame, a 50^{th} frame, or a 100^{th} frame. The mapping rule between the frame information and the algorithm model information may be set according to actual requirements. The algorithm model information may include at least one of identification information of algorithm model instructions, a storage space address of the algorithm model instructions, a name of an algorithm model, and other information.

In some optional embodiments, the algorithm model information may include relevant information corresponding to at least one algorithm model. For example, for the autonomous driving scenario, the algorithm model information may include a front-looking perception model, a panoramic perception model, a DMS (driver monitor system) perception model, a perception fusion model, a prediction model, a planning model, a diagnostic model, a laser radar perception model, and the like. Processing for the to-be-processed image may include direct processing based on the perception model and subsequent applications of a perception result based on the planning model. Therefore, complete vehicle planning and control may be performed based on the to-be-processed image. This may be set according to actual requirements.

In some optional embodiments, for the mapping rule between the frame information and the algorithm model information, for example, for a same set of algorithm models, the algorithm model instructions thereof may be copied for multiple times and may be respectively stored in different storage subspaces in a first preset storage space (such as a memory). Corresponding algorithm model information is set for each copy of the algorithm model instructions, to uniquely identify different copies of the algorithm model instructions. Multiple pieces of algorithm model information may be obtained, and the mapping rule between the frame information and the algorithm model information may be established. For example, the frame information corresponds to various pieces of algorithm model information in turns according to a preset frame interval. Taking three pieces of algorithm model information as an example, if the preset frame interval is 1, a (n+1)^{th} frame corresponds to algorithm model information 1, a (n+2)^{th} frame corresponds to algorithm model information 2, and a (n+3)^{th} frame corresponds to algorithm model information 3. n=0,1, .... The preset frame interval may also be set to 2, 3, 4, or the like, which is not specifically limited. In this case, the algorithm model information corresponding to the current frame information may be determined from the multiple pieces of algorithm model information based on the current frame information of the to-be-processed image and the mapping rule. In this way, the target artificial intelligence accelerator that needs to execute the algorithm model instructions corresponding to the algorithm model information is determined based on the algorithm model information corresponding to the current frame information, to execute the algorithm model instructions to obtain the processing result.

In some optional embodiments, there may be one or more target artificial intelligence accelerators (target accelerators for short), which may be specifically set according to actual requirements. If there is one optional artificial intelligence accelerator, current algorithm model information is determined based on the to-be-processed image. Based on the algorithm model information, the artificial intelligence accelerator is directly determined as the target artificial intelligence accelerator for executing the algorithm model instructions corresponding to the algorithm model information. If there are multiple optional artificial intelligence accelerators, the target artificial intelligence accelerator currently configured to execute the algorithm model instructions may be determined from the multiple artificial intelligence accelerators according to the pre-configured rule. For example, multiple accelerators are called in turns according to the frame interval as target artificial intelligence accelerators, or multiple accelerators are called simultaneously for each frame to execute different parts of the algorithm model instructions. This may be set according to actual requirements, provided that continuous errors in image processing can be effectively reduced.

In some optional embodiments, for the case in which there are multiple accelerators, for each target accelerator, the different parts of the algorithm model instructions may be executed in turns at different frames. For example, the algorithm model instructions are divided into multiple parts based on a quantity of algorithm models, such as a part 1, a part 2, and a part 3. There are three target accelerators. At a (n+1)^{th} frame, an accelerator 1 executes the part 1, an accelerator 2 executes the part 2, and an accelerator 3 executes the part 3. At a (n+2)^{th} frame, the accelerator 1 executes the part 2, the accelerator 2 executes the part 3, and the accelerator 3 executes the part 1. At a (n+3)^{th} frame, the accelerator 1 executes the part 3, the accelerator 2 executes the part 1, and the accelerator 3 executes the part 2.

In the embodiments, the algorithm model information corresponding to the current frame information is determined from the multiple pieces of algorithm model information according to the mapping rule between the current frame information of the to-be-processed image and the algorithm model information, so that the target artificial intelligence accelerator executing the algorithm model instructions corresponding to the algorithm model information is determined for executing the algorithm model instructions. In this way, a probability of continuous inference errors of the accelerator may be effectively reduced, and continuous errors may be changed into intermittent errors. Thus, error tolerance time may be effectively prolonged. In combination with the detection of the preset state of the accelerator and the adjustment of the working state of the chip in this disclosure, diagnostic coverage may be greatly improved, thereby greatly improving availability and security of the chip.

In some optional embodiments, when the state information indicating that the accelerator is in the preset state is determined based on the state determining indicator, for a case in which the quantity of times is greater than 0 and is less than the threshold of times, while the operating state of the chip is kept, notification information indicating an inaccurate inference result of the accelerator may be output to a subsequent module that uses the processing result of the accelerator, or the inference result of the accelerator may be marked as untrustworthy, so that the subsequent module can take corresponding countermeasures when using the corresponding inference result.

FIG. 5 is a schematic flowchart of a method for adjusting an artificial intelligence chip according to yet another exemplary embodiment of this disclosure.

In some optional embodiments, step 201 of determining the state information indicating that the artificial intelligence accelerator on the artificial intelligence chip is in the preset state includes the following steps.

Step 201a: Determine a test vector corresponding to the artificial intelligence accelerator.

The test vector is a vector for the calculation unit of the accelerator to perform logical self tests, and may be a random vector or a traversal vector, which is not specifically limited.

Step 201b: Test the artificial intelligence accelerator based on the test vector, to obtain a test result.

The test vector may be driven into the accelerator through a logic self-test structure of the chip. The calculation unit of the accelerator completes corresponding calculations to obtain a calculation result, and compares the calculation result with an expected calculation result, to determine the test result of the accelerator. A specific test principle is not described. The test result may include two results: test passed and test not passed.

In some optional embodiments, when the accelerator has an error, the accelerator may be tested multiple times by repeating a test vector with the error, to obtain multiple test results.

Step 201c: Determine, based on the test result, the state information indicating that the artificial intelligence accelerator is in the preset state.

If the test result is test passed, it indicates that the accelerator is not in the preset state. If the test result is test not passed, it indicates that the accelerator is in the preset state.

In some optional embodiments, the state information indicating that the accelerator is in the preset state may be determined based on the test result of test not passed. When a quantity of errors in the multiple test results exceeds a preset quantity of times, it is determined that the accelerator has a permanent error, or it is determined that the quantity of times for which the accelerator is in the preset state meets the preset condition.

In some optional embodiments, step 202 of adjusting the working state of the artificial intelligence chip based on the state information includes the following steps.

Step 202a: Determine, based on the state information, a quantity of times for which the artificial intelligence accelerator is in the preset state.

For determining of the quantity of times, reference is made to the content described above, and details are not described herein again.

Step 202b: Determine, from the artificial intelligence accelerators based on the quantity of times, a target artificial intelligence accelerator with a quantity of times less than or equal to the threshold of times.

During working of the chip, the state information of each accelerator may be maintained in a real-time manner, so that a quantity of times for which each accelerator is in the preset state may be determined. Based on the quantity of times, the target artificial intelligence accelerator with the quantity of times less than or equal to the threshold of times is determined from the accelerators. For an accelerator with no errors, a quantity of times is 0, and thus the accelerator can serve as the target accelerator.

Step 202c: Adjust the working state of the artificial intelligence chip from an operating state of performing image processing by using the artificial intelligence accelerator to an operating state of performing image processing by using the target artificial intelligence accelerator.

An accelerator with a quantity of times greater than the threshold of times is prohibited from being called during a subsequent calling process, so as to avoid further errors.

In the embodiments, the target artificial intelligence accelerator, for which the quantity of times is less than or equal to the threshold of times, is determined from the artificial intelligence accelerators based on the quantity of times. The target artificial intelligence is used for subsequent acceleration and inference. In this way, continuous permanent errors caused by reuse of the accelerator with the permanent error may be avoided, which further improves the working reliability of the chip, thereby further improving the driving safety of the vehicle.

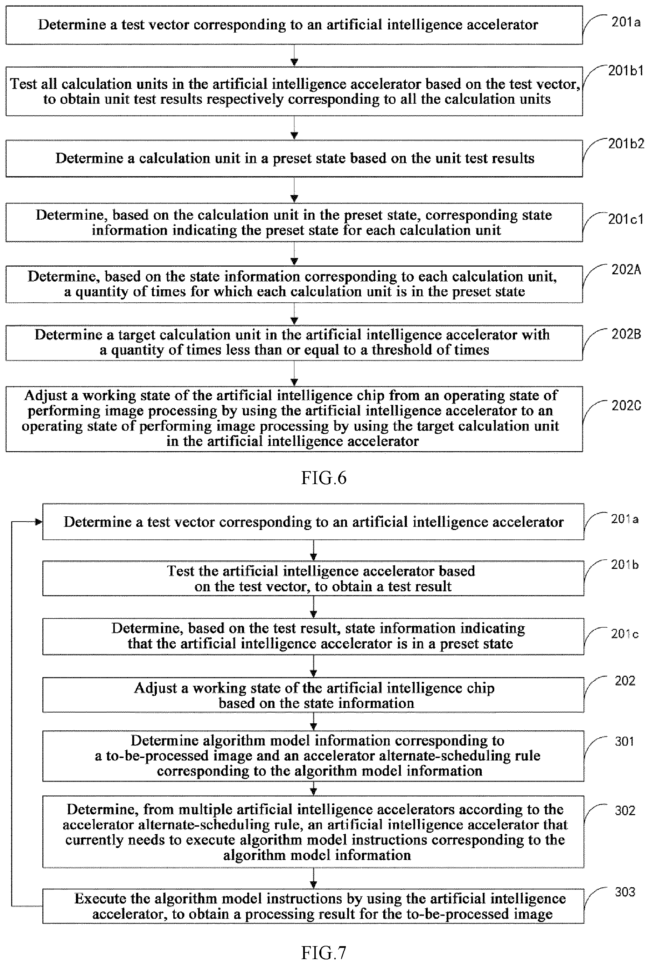

FIG. 6 is a schematic flowchart of a method for adjusting an artificial intelligence chip according to a further exemplary embodiment of this disclosure.

In some optional embodiments, step 201b of testing the artificial intelligence accelerator based on the test vector, to obtain the test result includes the following steps.

Step 201b1: Test all calculation units in the artificial intelligence accelerator based on the test vector, to obtain unit test results respectively corresponding to all the calculation units.

A logic self-test structure that can test the calculation unit of the accelerator may be disposed on the chip according to actual requirements, so as to test the calculation unit.

Step 201b2: Determine a calculation unit in the preset state based on the unit test results.

The calculation unit in the preset state may be determined based on the unit test results, which helps avoid a calculation unit with an error during subsequent inference.

Step 201c of determining, based on the test result, the state information indicating that the artificial intelligence accelerator is in the preset state includes:

Step 201c1: Determine, based on the calculation unit in the preset state, corresponding state information indicating the preset state for each calculation unit.

In the embodiments, the calculation unit with the error is located through testing of the calculation unit of the accelerator, so that smaller units of hardware with errors may be disabled at a finer granularity. Compared with disabling the accelerator, more computing resources may be reserved, so that the availability of the chip is further improved, thereby effectively improving effective utilization of the computing resources of the chip.

In some optional embodiments, step 202 of adjusting the working state of the artificial intelligence chip based on the state information includes the following steps:

Step 202A: Determine, based on the state information corresponding to each calculation unit, a quantity of times for which each calculation unit is in the preset state.

During the testing process, the state information corresponding to each calculation unit may be maintained in a real-time manner, so that the quantity of times corresponding to each calculation unit may be determined.

Step 202B: Determine a target calculation unit in the artificial intelligence accelerator with a quantity of times less than or equal to the threshold of times.

Step 202C: Adjust the working state of the artificial intelligence chip from an operating state of performing image processing by using the artificial intelligence accelerator to an operating state of performing image processing by using the target calculation unit in the artificial intelligence accelerator.

In the embodiments, the working state of the chip is adjusted from the operating state of performing image processing by using the artificial intelligence accelerator to the operating state of performing image processing by using the target calculation unit in the artificial intelligence accelerator, so as to effectively avoid use of a calculation unit with a quantity of errors greater than the threshold of times for subsequent calculations. In this way, continuous errors may be avoided, so as to further improve the working reliability of the chip, thereby improving the driving safety of the vehicle to which the chip is applied.

FIG. 7 is a schematic flowchart of a method for adjusting an artificial intelligence chip according to still further exemplary embodiment of this disclosure.

In some optional embodiments, the method in this disclosure further includes the followings steps.

Step 301: Determine algorithm model information corresponding to the to-be-processed image and an accelerator alternate-scheduling rule corresponding to the algorithm model information.

The accelerator alternate-scheduling rule characterizes a rule for alternately scheduling multiple accelerators. To be specific, there are multiple optional accelerators, which are scheduled according to the accelerator alternate-scheduling rule to execute the algorithm model instructions corresponding to the algorithm model information. The accelerator alternate-scheduling rule corresponding to the algorithm model information may be determined based on a pre-configured corresponding relationship. For example, different accelerator alternate-scheduling rules may be set for different algorithm model groups. Thus, the accelerator alternate-scheduling rule corresponding to the algorithm model group may be determined based on the algorithm model information.

In some optional embodiments, the accelerator alternate-scheduling rules may include scheduling multiple accelerators alternately according to the preset frame interval, which may be set according to actual requirements. For example, if the preset frame interval is 1, the accelerator 1 is correspondingly scheduled at the first frame, the accelerator 2 is correspondingly scheduled at a second frame, an accelerator n is correspondingly scheduled at an n^{th} frame, the accelerator 1 is correspondingly scheduled at the (n+1)^{th} frame, the accelerator 2 is correspondingly scheduled at the (n+2)^{th} frame, and the others may be deduced by analogy. n is a quantity of the accelerators.

In some optional embodiments, the accelerator alternate-scheduling rule may include a scheduling sequence of the multiple accelerators, and may also include a quantity of accelerators scheduled each time. For example, the scheduling sequence is accelerator 1-accelerator 2-accelerator 3-accelerator 1-accelerator 2-accelerator 3-....

Step 302: Determine, from multiple artificial intelligence accelerators, according to the accelerator alternate-scheduling rule, an artificial intelligence accelerator that currently needs to execute the algorithm model instructions corresponding to the algorithm model information.

There may be one or more artificial intelligence accelerators that currently need to execute the algorithm model instructions corresponding to the algorithm model information, which may be specifically set according to actual requirements.

In some optional embodiments, one accelerator may be scheduled at each frame according to the preset frame interval to execute the algorithm model instructions corresponding to the algorithm model information. For example, the accelerator 1 is scheduled at a (t+1)^{th} frame, the accelerator 2 is scheduled at a (t+2)^{th} frame, ..., and the accelerator n is scheduled at a (t+n)^{th} frame, where t=0, 1, 2, ..., and n is a quantity of accelerators.

In some optional embodiments, at least two accelerators may be scheduled at each frame according to the preset frame interval to collaboratively execute the algorithm model instructions. For example, the algorithm model instructions are divided into algorithm model instructions respectively corresponding to multiple algorithm model groups based on algorithm models included in the algorithm model instructions, and each accelerator executes algorithm model instructions corresponding to one algorithm model group. The at least two accelerators may include some or all of the multiple optional accelerators. For example, there are 6 optional accelerators, two accelerators are scheduled at each frame to collaboratively execute the algorithm model instructions of two divided algorithm model groups, and the accelerators are alternately scheduled according to the preset frame interval. For example, an accelerator 1 and an accelerator 2 are scheduled at a first frame, an accelerator 3 and an accelerator 4 are scheduled at a second frame, an accelerator 5 and an accelerator 6 are scheduled at a third frame, the accelerator 1 and the accelerator 2 are scheduled at a fourth frame, and the others may be deduced by analogy. Alternatively, the accelerator 1 and the accelerator 2 are scheduled at the first frame, the accelerator 2 and the accelerator 3 are scheduled at the second frame, the accelerator 3 and the accelerator 4 are scheduled at the third frame, and the others may be deduced by analogy. Other alternate scheduling rules may also be used, provided that each accelerator does not execute same algorithm model instructions more than a preset quantity of times consecutively. The specific alternate scheduling rule is not limited.

In some optional embodiments, an accelerator alternation sequence may be determined according to the accelerator alternate-scheduling rule; and the artificial intelligence accelerator that currently needs to execute the algorithm model instructions corresponding to the algorithm model information may be determined according to the accelerator alternation sequence. The accelerator alternation sequence may be set according to actual requirements. For example, if there are three accelerators, the accelerator alternation sequence is accelerator 1-accelerator 2-accelerator 3, indicating that the accelerator 1 to the accelerator 3 are alternated cyclically.

In some optional embodiments, identification information respectively corresponding to multiple algorithm models may also be determined based on the algorithm model information; multiple algorithm model groups corresponding to the algorithm model information are determined based on a preset grouping rule and the identification information respectively corresponding to the algorithm models; and for any algorithm model group, an artificial intelligence accelerator that currently needs to execute algorithm model instructions corresponding to the algorithm model group is determined based on historical accelerator scheduling information corresponding to the algorithm model group and according to the accelerator alternation sequence.

The identification information corresponding to the algorithm model may be set according to actual requirements, provided that the algorithm model can be uniquely identified. This is not limited in this disclosure. For example, the identification information of the algorithm model may be a name of the algorithm model or an ID set for the algorithm model. The algorithm model information may include an overall identifier of algorithm model instructions of a set of algorithm models required for image processing, and may also include the identification information of each algorithm model, a storage space address of the algorithm model instructions corresponding to each algorithm model, and other relevant information. This may be specifically set according to actual requirements. Based on the algorithm model information, the identification information corresponding to each algorithm model included therein may be determined. Each algorithm model group includes identification information of at least one algorithm model. The preset grouping rule may be set according to actual requirements. For example, the preset grouping rule may be set randomly, or may be set according to a principle of load balance based on computing power required by each algorithm model, so as to ensure load balance of the accelerator and improve processing efficiency. Multiple algorithm model groups corresponding to the algorithm model information may also be determined in any other implementable manners, which is not specifically limited.

For example, algorithm models included in the algorithm model information include a front-looking perception model, a panoramic perception model, a DMS perception model, a perception fusion model, a prediction model, a planning model, a diagnostic model, a laser radar perception model, which are classified into three algorithm model groups. An algorithm model group 1 includes the front-looking perception model, the panoramic perception model, and the laser radar perception model. An algorithm model group 2 includes the perception fusion model and the DMS perception model. An algorithm model group 3 includes the prediction model, the planning model, and the diagnostic model.

The historical accelerator scheduling information includes an accelerator scheduling situation at a previous frame, which may be used to determine a position for scheduling the accelerator at the current frame.

In some optional embodiments, for different algorithm model groups, different initial accelerators may be set for scheduling. For example, at the first frame, the algorithm model group 1 correspondingly schedules the accelerator 1, the algorithm model group 2 correspondingly schedules the accelerator 2, the algorithm model group 3 correspondingly schedules the accelerator 3, and the others may be deduced by analogy. In processing of subsequent frames, each algorithm model group alternately schedules all accelerators according to the same accelerator alternation sequence, so as to ensure that multiple accelerators can collaborate to complete algorithm model instructions of multiple algorithm model groups at each frame, and each algorithm model group can alternately schedule all the accelerators according to the preset frame interval. For example, based on the historical accelerator scheduling information of the first frame, at the second frame, using three accelerators as an example, according to an alternation sequence of accelerators 1-2-3, the algorithm model group 1 needs to schedule the accelerator 2, the algorithm model group 2 needs to schedule the accelerator 3, and the algorithm model group 3 needs to schedule the accelerator 1. At the third frame, the algorithm model group 1 needs to schedule the accelerator 3, the algorithm model group 2 needs to schedule the accelerator 1, the algorithm model group 3 needs to schedule the accelerator 2, and the others may be deduced by analogy.

Step 303: Execute the algorithm model instructions by using the artificial intelligence accelerator, to obtain a processing result for the to-be-processed image.

In the embodiments, according to the accelerator alternate-scheduling rule, multiple accelerators may be scheduled alternately, so that each accelerator would not execute same algorithm model instructions multiple times consecutively. Thus, continuous errors caused by a hardware failure of the accelerator may be effectively reduced. In this way, a probability of image processing errors caused by the hardware failure of the accelerator is greatly reduced, thereby further improving the driving safety of the vehicle to which the chip is applied. Moreover, by combining self-test of the chip with alternating scheduling of multiple accelerators, the error tolerance time may be effectively prolonged, thereby greatly improving self-test coverage.

In some optional embodiments, multiple accelerators may be further scheduled in combination with the multiple pieces of algorithm model information and the multiple algorithm model groups corresponding to each piece of algorithm model information, to alternately execute the algorithm model instructions respectively corresponding to the algorithm model groups. In this way, a probability of image processing errors caused by hardware failures of a memory and hardware failures of the accelerator may be reduced simultaneously, to further prolong the error tolerance time, thereby improving detection coverage, so as to further effectively improve the working reliability of the chip, and effectively improve the driving safety of the vehicle to which the chip is applied.

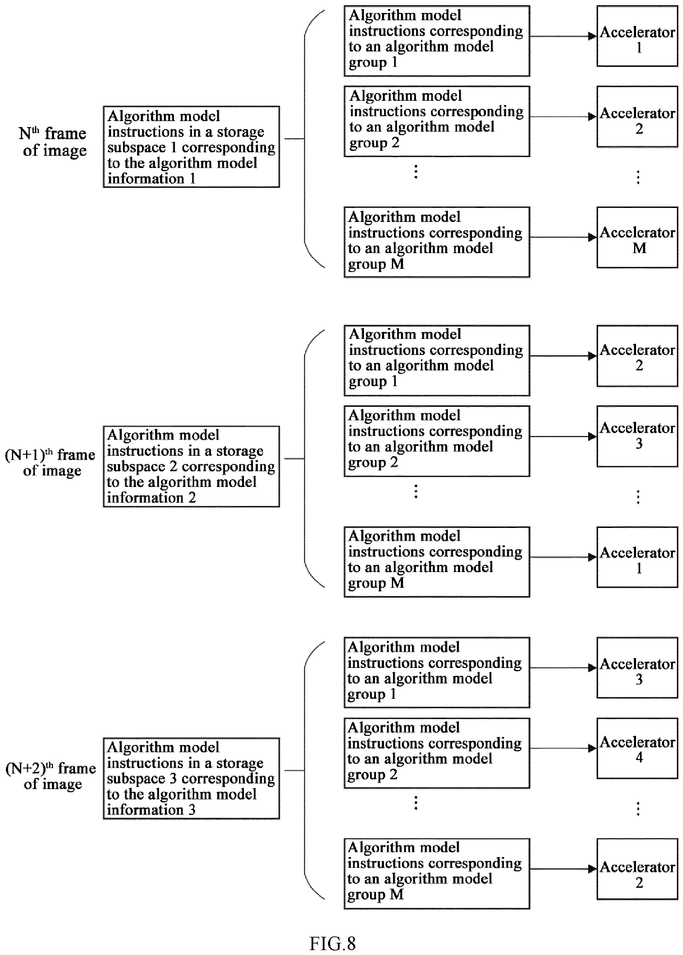

For example, FIG. 8 is a schematic diagram of accelerator scheduling for multi-frame image processing according to an exemplary embodiment of this disclosure. In this example, there are three pieces of algorithm model information, which are represented as algorithm model information 1, algorithm model information 2, and algorithm model information 3. To be specific, same algorithm model instructions are stored in three different storage subspaces (including a storage subspace 1 corresponding to the algorithm model information 1, a storage subspace 2 corresponding to the algorithm model information 2, and a storage subspace 3 corresponding to the algorithm model information 3) of the first preset storage space. There are M algorithm model groups corresponding to the algorithm model information, and there are M accelerators. At an N^{th} frame, the M algorithm model groups, including algorithm model groups 1 to M, that correspond to the algorithm model information 1 may be determined by using the algorithm model instructions in the storage subspace 1 corresponding to the algorithm model information 1. M accelerators are scheduled according to an accelerator scheduling sequence, wherein the algorithm model group 1 correspondingly schedules the accelerator 1, the algorithm model group 2 correspondingly schedules the accelerator 2, and the others may be deduced by analogy. At a (N+1)^{th} frame, the algorithm model instructions in the storage subspace 2 corresponding to the algorithm model information 2 are used. Because historical accelerator scheduling information of the algorithm model group 1 at the N^{th} frame is to correspondingly schedule the accelerator 1, according to the accelerator scheduling sequence, the algorithm model group 1 correspondingly schedules the accelerator 2 at the (N+1)^{th} frame. Similarly, the algorithm model group 2 correspondingly schedules the accelerator 3, ..., an algorithm model group M-1 correspondingly schedules an accelerator M, and the algorithm model group M correspondingly schedules the accelerator 1. Similarly, at the N^{th} frame, the algorithm model instructions in the storage subspace 3 corresponding to the algorithm model information 3 are used. The algorithm model group 1 correspondingly schedules the accelerator 3, the algorithm model group 2 correspondingly schedules the accelerator 4, ..., and the algorithm model group M correspondingly schedules the accelerator 2. Subsequent frames may be deduced by analogy, and details are not described.

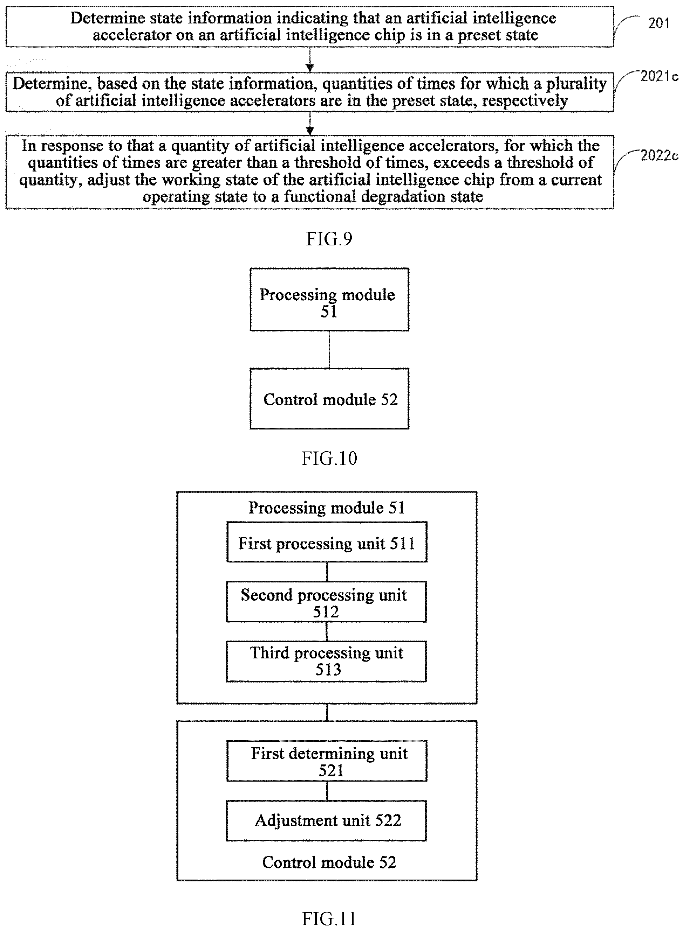

FIG. 9 is a schematic flowchart of a method for adjusting an artificial intelligence chip according to a yet further exemplary embodiment of this disclosure.

In some optional embodiments, step 202 of adjusting the working state of the artificial intelligence chip based on the state information includes the following steps.

Step 2021c: Determine, based on the state information, quantities of times for which a plurality of artificial intelligence accelerators are in the preset state, respectively.

Step 2022c: In response to that a quantity of artificial intelligence accelerators, for which the quantities of times are greater than a threshold of times, exceeds a threshold of quantity, adjust the working state of the artificial intelligence chip from a current operating state to a functional degradation state.

When the quantity of artificial intelligence accelerators, for which the quantities of times are greater than the threshold of times, exceeds a threshold of quantity, insufficient remaining available computing power of the accelerator may be easily caused, being unable to support continuous operation of the current operating state. Therefore, the working state of the artificial intelligence chip needs to be adjusted from the current operating state to the functional degradation state, so as to improve driving safety of the vehicle.

In some optional embodiments, the state information indicating that the accelerator is in the preset state may also be determined in combination with the state determining indicator and the test result, so as to further improve the detection coverage.

The foregoing embodiments of this disclosure may be implemented separately or in any combination without conflict. This may be specifically set according to actual requirements, and is not limited in this disclosure.

Any method for adjusting an artificial intelligence chip provided in the embodiments of this disclosure may be implemented by any suitable device with a data processing capability, including but not limited to a terminal device and a server. Alternatively, any method for adjusting an artificial intelligence chip provided in the embodiments of this disclosure may be implemented by a processor. For example, the processor implements any method for adjusting an artificial intelligence chip described in the embodiments of this disclosure by invoking corresponding instructions stored in a memory. Details are not described below again.

### Exemplary apparatus

FIG. 10 is a schematic diagram of a structure of an apparatus for adjusting an artificial intelligence chip according to an exemplary embodiment of this disclosure. The apparatus in this embodiment may be configured to implement the corresponding embodiments of the method for adjusting an artificial intelligence chip in this disclosure. The apparatus shown in FIG. 10 includes a processing module 51 and a control module 52.

The processing module 51 is configured to determine state information indicating that an artificial intelligence accelerator on an artificial intelligence chip is in a preset state.

The control module 52 is configured to adjust a working state of the artificial intelligence chip based on the state information.

FIG. 11 is a schematic diagram of a structure of an apparatus for adjusting an artificial intelligence chip according to another exemplary embodiment of this disclosure.

In some optional embodiments, the control module 52 includes a first determining unit 521 and an adjustment unit 522.

The first determining unit 521 is configured to determine, based on the state information, a quantity of times for which the artificial intelligence accelerator is in the preset state.

The adjustment unit 522 is configured to adjust, in response to that the quantity of times meets a preset condition, the working state of the artificial intelligence chip from a current operating state to a target state.

In some optional embodiments, the processing module 51 includes a first processing unit 511, a second processing unit 512, and a third processing unit 513.

The first processing unit 511 is configured to process a to-be-processed image by using the artificial intelligence accelerator, to obtain a processing result.

The second processing unit 512 is configured to determine a state determining indicator corresponding to the artificial intelligence accelerator based on the processing result.

The third processing unit 513 is configured to determine, based on the state determining indicator, the state information indicating that the artificial intelligence accelerator is in the preset state.

In some optional embodiments, the second processing unit 512 is specifically configured to:
determine, based on the processing result, confidence of the processing result and uncertainty of an algorithm model corresponding to algorithm model instructions executed by the artificial intelligence accelerator; and determine the state determining indicator based on the confidence of the processing result and the uncertainty.

In some optional embodiments, the first processing unit 511 is further configured to perform preset post-processing on the processing result to obtain a post-processing result; and determine a post-processing indicator based on the post-processing result and a post-processing indicator determining rule. The second processing unit 512 is specifically configured to take the confidence of the processing result, the uncertainty, and the post-processing indicator as the state determining indicator.

In some optional embodiments, the first processing unit 511 is further configured to determine a signal-to-noise ratio of to-be-processed data corresponding to the artificial intelligence accelerator. The second processing unit 512 is specifically configured to take the confidence of the processing result, the uncertainty, and the signal-to-noise ratio as the state determining indicator.

In some optional embodiments, the first determining unit 521 is configured to determine, based on the state information, the quantity of times for which the artificial intelligence accelerator is in the preset state. The adjustment unit 522 is configured to adjust, in response to that the quantity of times is greater than a threshold of times, the working state of the artificial intelligence chip from the current operating state to a functional degradation state.

In some optional embodiments, the first processing unit 511 is specifically configured to:

determine current frame information corresponding to the to-be-processed image; determine, according to a mapping rule between the frame information and algorithm model information, algorithm model information corresponding to the current frame information, from multiple pieces of algorithm model information; determine, based on the algorithm model information corresponding to the current frame information, a target artificial intelligence accelerator that needs to execute algorithm model instructions corresponding to the algorithm model information, from the artificial intelligence accelerator; and execute the algorithm model instructions by using the target artificial intelligence accelerator, to obtain the processing result.

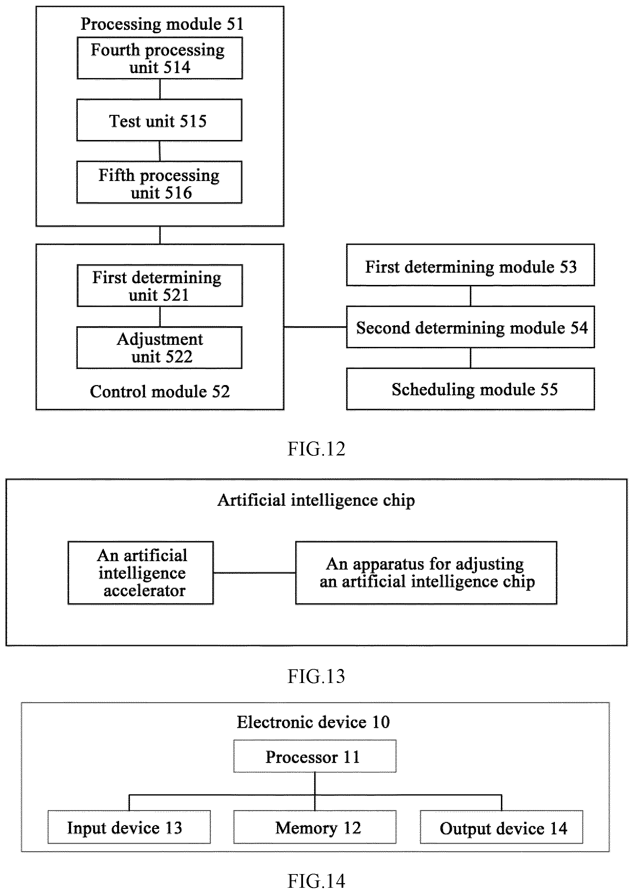

FIG. 12 is a schematic diagram of a structure of an apparatus for adjusting an artificial intelligence chip according to still another exemplary embodiment of this disclosure.

In some optional embodiments, the processing module 51 includes a fourth processing unit 514, a test unit 515, and a fifth processing unit 516.

The fourth processing unit 514 is configured to determine a test vector corresponding to the artificial intelligence accelerator.

The test unit 515 is configured to test the artificial intelligence accelerator based on the test vector, to obtain a test result.

The fifth processing unit 516 is configured to determine, based on the test result, the state information indicating that the artificial intelligence accelerator is in the preset state.

In some optional embodiments, the first determining unit 521 is configured to determine, based on the state information, the quantity of times for which the artificial intelligence accelerator is in the preset state; and determine, from the artificial intelligence accelerator based on the quantity of times, a target artificial intelligence accelerator, for which the quantity of times is less than or equal to the threshold of times. The adjustment unit 522 is configured to adjust the working state of the artificial intelligence chip from an operating state of performing image processing by using the artificial intelligence accelerator to an operating state of performing image processing by using the target artificial intelligence accelerator.

In some optional embodiments, the test unit 515 is specifically configured to test all calculation units in the artificial intelligence accelerator based on the test vector, to obtain unit test results respectively corresponding to all the calculation units. The fifth processing unit 516 is specifically configured to determine a calculation unit in the preset state based on the unit test results; and determine, based on the calculation unit in the preset state, corresponding state information indicating the preset state for each calculation unit.

In some optional embodiments, the first determining unit 521 is configured to determine, based on the state information corresponding to each calculation unit, a quantity of times for which each calculation unit is in the preset state; and determine a target calculation unit in the artificial intelligence accelerator, for which a quantity of times is less than or equal to the threshold of times. The adjustment unit 522 is configured to adjust the working state of the artificial intelligence chip from an operating state of performing image processing by using the artificial intelligence accelerator to an operating state of performing image processing by using the target calculation unit in the artificial intelligence accelerator.

In some optional embodiments, the apparatus in this disclosure further includes a first determining module 53, a second determining module 54, and a scheduling module 55.

The first determining module 53 is configured to determine algorithm model information corresponding to the to-be-processed image and an accelerator alternate-scheduling rule corresponding to the algorithm model information.

The second determining module 54 is configured to determine, from multiple artificial intelligence accelerators, according to the accelerator alternate-scheduling rule, an artificial intelligence accelerator that currently needs to execute the algorithm model instructions corresponding to the algorithm model information.

The scheduling module 55 is configured to execute the algorithm model instructions by using the artificial intelligence accelerator, to obtain a processing result for the to-be-processed image.

In some optional embodiments, the first determining unit 521 is configured to determine, based on the state information, quantities of times for which a plurality of artificial intelligence accelerators are in the preset state, respectively.

The adjustment unit 522 is configured to adjust, in response to that a quantity of artificial intelligence accelerators, for which the quantities of times are greater than a threshold of times, exceeds a threshold of quantity, the working state of the artificial intelligence chip from a current operating state to a functional degradation state.

For beneficial technical effects corresponding to the exemplary embodiments of this apparatus, reference may be made to the corresponding beneficial technical effects in the part of exemplary method described above, and details are not described herein again.

FIG. 13 is a schematic diagram of a structure of an artificial intelligence chip according to an exemplary embodiment of this disclosure. The artificial intelligence chip includes: an artificial intelligence accelerator and an apparatus for adjusting an artificial intelligence chip. The apparatus for adjusting an artificial intelligence chip is configured to implement the method for adjusting an artificial intelligence chip described in any one of the foregoing embodiments. There may be one or more artificial intelligence accelerators.

In some optional embodiments, the artificial intelligence chip in this disclosure may also include other related modules or units, such as an internal bus, another IP (intellectual property) core, a CPU (central processing unit) cluster, a security island, other hardware modules, and software modules such as a post-processing module. This may be specifically set according to actual requirements.

For beneficial effects corresponding to the embodiments of this chip, reference may be made to the corresponding beneficial technical effects in the part of exemplary method described above, and details are not described herein again.

### Exemplary electronic device

FIG. 14 is a schematic diagram of a structure of an electronic device according to an embodiment of this disclosure. The electronic device includes at least one processor 11 and a memory 12.

The processor 11 may be a central processing unit (CPU) or another form of processing unit having a data processing capability and/or instructions execution capability, and may control another component in the electronic device 10 to perform a desired function.

The memory 12 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute one or more of the program instructions to implement the method according to various embodiments of this disclosure that are described above and/or other desired functions.

In an example, the electronic device 10 may further include an input device 13 and an output device 14. These components are connected to each other through a bus system and/or another form of connection mechanism (not shown).

The input device 13 may further include, for example, a keyboard and a mouse.

The output device 14 may output various information to the outside, and may include, for example, a display, a speaker, a printer, a communication network, and a remote output device connected by the communication network.

Certainly, for simplicity, FIG. 14 shows only some of components in the electronic device 10 that are related to this disclosure, and components such as a bus and an input/output interface are omitted. In addition, according to specific application situations, the electronic device 10 may further include any other appropriate components.

### Exemplary computer program product and computer readable storage medium

In addition to the foregoing method and device, the embodiments of this disclosure may also provide a computer program product, which includes computer program instructions. When the computer program instructions are run by a processor, the processor is enabled to perform the steps, of the method according to the embodiments of this disclosure, that are described in the "exemplary method" part described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "exemplary method" part described above.

The computer readable storage medium may be one readable medium or any combination of a plurality of readable media. The readable medium may be a readable signal medium or a readable storage medium. The readable storage medium includes, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for adjusting an artificial intelligence chip, **characterized in that** method compris:
determining (201) state information indicating that an artificial intelligence accelerator on an artificial intelligence chip is in a preset state; and
adjusting (202) a working state of the artificial intelligence chip based on the state information.

2. The method according to claim 1, wherein the adjusting (202) a working state of the artificial intelligence chip based on the state information comprises:
determining (202a), based on the state information, a quantity of times for which the artificial intelligence accelerator is in the preset state; and
in response to that the quantity of times meets a preset condition, adjusting (2022a) the working state of the artificial intelligence chip from a current operating state to a target state.

3. The method according to claim 1, wherein the determining (201) state information indicating that an artificial intelligence accelerator on an artificial intelligence chip is in a preset state comprises:
processing (2011) a to-be-processed image by using the artificial intelligence accelerator, to obtain a processing result;
determining (2012) a state determining indicator corresponding to the artificial intelligence accelerator based on the processing result; and
determining (2013), based on the state determining indicator, the state information indicating that the artificial intelligence accelerator is in the preset state.

4. The method according to claim 3, wherein the determining (2012) a state determining indicator corresponding to the artificial intelligence accelerator based on the processing result comprises:
determining, based on the processing result, confidence of the processing result and uncertainty of an algorithm model corresponding to algorithm model instructions executed by the artificial intelligence accelerator; and
determining the state determining indicator based on the confidence of the processing result and the uncertainty.

5. The method according to claim 3, wherein the adjusting (202) a working state of the artificial intelligence chip based on the state information comprises:
determining (2021a), based on the state information, a quantity of times for which the artificial intelligence accelerator is in the preset state; and
in response to that the quantity of times is greater than a threshold of times, adjusting (2021b) the working state of the artificial intelligence chip from a current operating state to a functional degradation state.

6. The method according to claim 3, wherein the processing (2011) a to-be-processed image by using the artificial intelligence accelerator, to obtain a processing result, comprises:
determining current frame information corresponding to the to-be-processed image;
determining, according to a mapping rule between the frame information and algorithm model information, algorithm model information corresponding to the current frame information from multiple pieces of algorithm model information;
determining, from the artificial intelligence accelerator based on the algorithm model information corresponding to the current frame information, a target artificial intelligence accelerator that needs to execute algorithm model instructions corresponding to the algorithm model information; and
executing the algorithm model instructions by using the target artificial intelligence accelerator, to obtain the processing result.

7. The method according to claim 1, wherein the determining (201) state information indicating that an artificial intelligence accelerator on an artificial intelligence chip is in a preset state comprises:
determining (201a) a test vector corresponding to the artificial intelligence accelerator;
testing (201b) the artificial intelligence accelerator based on the test vector, to obtain a test result; and
determining (201c), based on the test result, the state information indicating that the artificial intelligence accelerator is in the preset state.

8. The method according to claim 1, wherein the adjusting (202) a working state of the artificial intelligence chip based on the state information comprises:
determining (2021c), based on the state information, quantities of times for which a plurality of artificial intelligence accelerators are respectively in the preset state; and
in response to that a quantity of artificial intelligence accelerators, for which the quantities of times are greater than a threshold of times, exceeds a threshold of quantity, adjusting (2022c) the working state of the artificial intelligence chip from a current operating state to a functional degradation state.

9. The method according to claim 1, wherein the adjusting (202) a working state of the artificial intelligence chip based on the state information comprises:
determining (2021b), based on the state information, a quantity of times for which the artificial intelligence accelerator is in the preset state; and
in response to that the quantity of times is greater than a threshold of times, adjusting(2022b) the working state of the artificial intelligence chip from a current operating state to a functional degradation state.

10. An apparatus for adjusting an artificial intelligence chip, **characterized in that** the apparatus comprises:
a processing module (51), configured to determine state information indicating that an artificial intelligence accelerator on an artificial intelligence chip is in a preset state; and
a control module (52), configured to adjust a working state of the artificial intelligence chip based on the state information.

11. The apparatus according to claim 10, wherein the processing module (51) comprises:
a first processing unit (511), configured to process a to-be-processed image by using the artificial intelligence accelerator, to obtain a processing result;
a second processing unit (512), configured to determine a state determining indicator corresponding to the artificial intelligence accelerator based on the processing result; and
a third processing unit (513), configured to determine, based on the state determining indicator, the state information indicating that the artificial intelligence accelerator is in the preset state.

12. The apparatus according to claim 10, wherein the control module (52) comprises:
a first determining unit (521), configured to determine, based on the state information, a quantity of times for which the artificial intelligence accelerator is in the preset state; and
an adjustment unit (522), configured to adjust, in response to that the quantity of times meets a preset condition, the working state of the artificial intelligence chip from a current operating state to a target state.

13. The apparatus according to claim 10, wherein the processing module (51) comprises:
a fourth processing unit (514), configured to determine a test vector corresponding to the artificial intelligence accelerator;
a test unit (515), configured to test the artificial intelligence accelerator based on the test vector, to obtain a test result; and
a fifth processing unit (516), configured to determine, based on the test result, the state information indicating that the artificial intelligence accelerator is in the preset state.

14. An artificial intelligence chip, **characterized in that** the chip comprises:
an artificial intelligence accelerator and an apparatus for adjusting an artificial intelligence chip, wherein
the apparatus for adjusting an artificial intelligence chip is configured to implement the method for adjusting an artificial intelligence chip according to any one of claims 1 to 9.

15. A computer readable storage medium, **characterized in that** the storage medium stores a computer program, and the computer program is used for implementing the method for adjusting an artificial intelligence chip according to any one of claims 1 to 9.
